# EUROPEAN PATENT APPLICATION

(11) **EP 1 123 816 A2**
(43) Date of publication of application: **16.08.2001**
(21) Application number: 01103076.4
(22) Date of filing: 09.02.2001
(51) Int. Cl.: B60B 3/16

(54) **A fixing device, in particular for a wheel of a motor vehicle**

(30) Priority: 10.02.2000 IT TO000128
(71) Applicant: I.B.S.-Industria Bulloneria Speciale S.r.l., 10090 Ferriera Di Buttigliera Alta (Torino) (IT)
(72) Inventor: Fontana, Luigi, 20050 Verduggio con Colzano, (Milano) (IT)
(74) Representative: Gerbino, Angelo

(57) **Abstract**

A fixing device, in particular for a wheel of a motor vehicle, includes a screw (10) with a head (14) and a stem (16) having a proximal portion (18) and a threaded distal portion (20). The device also includes a first washer (12) arranged coaxially around the proximal portion (18) of the stem (16) and generally tapering in cross section towards the distal portion (20). The perimeter of the said section includes a first side (22) substantially parallel to the axis (24) of the stem (16) and facing the proximal portion (18) and a second side (26) substantially orthogonal to the axis (24) of the stem (16) and facing the base of the head (14).

## Description

The present invention relates to a fixing device, in particular for a wheel of a motor vehicle, which includes a screw with a head and a stem comprising a proximal portion and a threaded distal portion.

Screws of the type described above, in which the lower portion of the head is conical or hemispherical, are commonly used in the art to fix motor vehicle wheels to the appropriate hubs. Such screws pass through respective holes formed in the rim of the wheel, with the lower portion of the head engaging seats of a complementary shape in the rim, and the distal portion engaging threaded holes in the hub.

In particular, in the case of light alloy wheel rims, which are becoming increasingly common, repeated operations of turning fixing screws in or out (owing to the need to remove a wheel in order to carry out repairs or to balance it) cause the seats to deteriorate since the rim is made of a relatively soft material compared to that of the screws; this compromises the correct fixing of the wheel.

The object of the present invention is to prevent such a problem, by providing a fixing device having the characteristics stated at the start of this description and characterised in that it also includes a first washer positioned coaxially around the proximal portion of the screw stem, with a cross section tapering towards the distal portion, with the perimeter of this cross section having a first side substantially parallel to the axis of the stem and facing the proximal portion and a second side substantially orthogonal to the axis of the stem and facing the base of the head.

The first washer is the part of the device which comes into contact with the seat formed in the wheel rim. Since this washer does not turn while the screw is screwed in or out, it does not put stress on the seat, which is thus not damaged, even after repeated operations on the screw.

The device of the invention provides the additional advantage that the clearance between the inner diameter of the first washer and the screw stem enables any misalignment between the holes through the hub and. through the wheel rim to be corrected, thereby ensuring that the axes of the screw and the associated threaded hole are coaxial.

Further characteristics and advantages of the present invention will become apparent from the detailed description which follows, provided purely by way of non-limitative example, with reference to the appended drawings, in which:
Figure 1 is a partially sectioned side view of an embodiment of the invention;
Figure 2 shows the device of Figure 1 mounted on a first type of wheel rim;
Figure 3 shows the device of Figure 1 mounted on a second type of wheel rim;
Figure 4 is a partially sectioned side view of a different embodiment of the invention;
Figure 5 shows the device of Figure 4 mounted on a first type of wheel rim; and
Figure 6 shows the device of Figure 5 mounted on a second type of wheel rim.

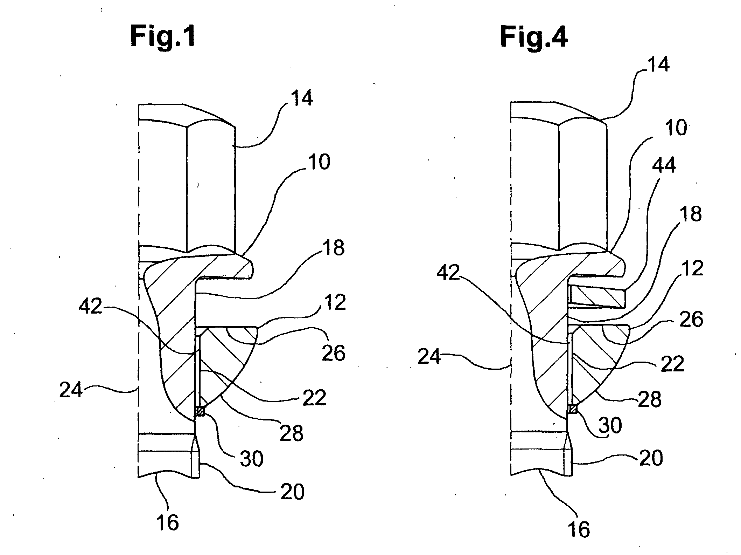

A fixing device, in particular for fixing a motor vehicle wheel to an associated hub, includes (see Figure 1) a screw 10 and a first washer 12.

As known per se in the art, the screw 10 has a head 14 and a stem 16 with a non-threaded proximal portion 18 and a threaded distal portion 20.

The first washer 12 is arranged coaxially around the proximal portion 18 of the stem 16 and tapers in cross section towards the distal portion 20. In particular, the perimeter of the cross section of the washer 12 includes a first side 22, substantially parallel to the axis 24 of the stem 16 and facing the proximal portion 18, and a second side 26, substantially orthogonal to the axis 24 of the stem 16 and facing the base of the head 14. The first side 22 and the second side 24 are joined by a curved third side 28 in such a way that, in cross section, the first washer 12 is substantially shaped like a "quarter of an ellipse".

In other embodiments of the invention, not illustrated, this cross section could be a quadrant of a circle, if the first side 22 and the second side 26 were the same length, or a right angle triangle, if the first side 22 and the second side 26 were joined by a straight third side.

The end 30 of the first washer 12 facing the distal portion 20 of the stem 16 is squashed to ensure that the washer 12 remains associated with the screw 10, even when this latter is not engaged in the associated threaded seat (i.e. the washer 12 cannot slide along the stem 16).

If necessary, specific portions or the entire surface of the screw 10 and/or the washer 12 can be individually coated, by methods known in the art, with coatings selected to provide particular operating characteristics, a particular coefficient of friction for example, or aesthetic characteristics, such as a chrome finish.

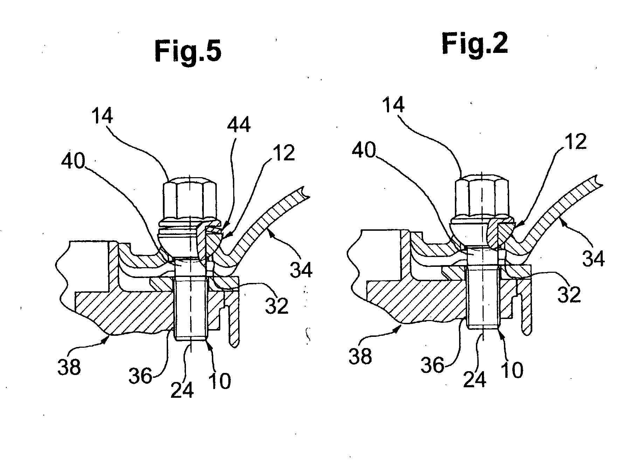

In use (see Figure 2) the screw 10, fitted with an associated washer 12, is passed through a hole 32 in a wheel rim 34 in such a way that the distal portion 20 engages a threaded hole 36 in the hub 38. The washer 12 remains on the outside of the rim 34 and engages a seat 40 formed therein, thereby constituting the contact element of the device.

Since the washer 12 does not rotate when the screw 10 is screwed in or out, it causes no stress on the seat 40 which is thus not damaged, even after numerous operations on the screw.

In addition, the clearance 42 (see Figure 1) between the internal diameter of the first washer 12 and the stem 16 of the screw 10 makes it possible to correct any misalignment between the hole 36 in the hub 38 and the hole 32 in the rim 34, thereby ensuring that the axes 24 of the screw 10 and of the associated threaded hole 36 remain coaxial.

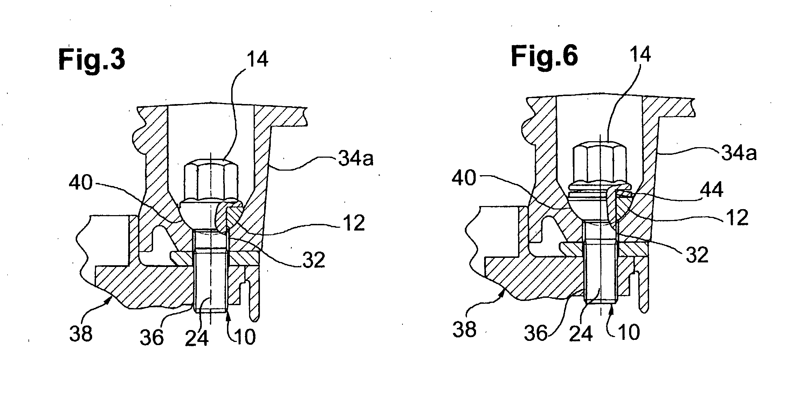

Figure 3 shows the device of Figure 1 mounted on a different type of wheel rim 34a. Assembly is substantially the same as for the above rim and offers the same advantages.

Figures 4 to 6, which correspond to Figures 1 to 3 respectively, illustrate an alternative embodiment, with reference numerals which are the same as those used in the previous drawings corresponding to the same or equivalent parts.

In this case, the device also includes a second washer 44 of a resilient type, which is arranged coaxially around the proximal portion 18 of the stem 16 of the screw 10 between the first washer 12 and the base of the head 14 of the screw 10. The second washer 44 is of a type known per se, a Belleville or a Grover for example.

The device shown in Figures 4 to 6 operates in the same way as that shown in Figures 1 to 3 and offers the same advantages. In addition, the presence of the second washer 44 compensates for any small reduction in the thickness of the assembly of parts held by the screw 10, which would otherwise reduce the tension stress on the screw 10 and thus impair its performance.

Should any such reduction in thickness occur, the washer 44 would automatically expand axially, thus compensating for this and ensuring that stress on the screw 10 remains unchanged.

Naturally, the principle of the invention remaining unchanged, manufacturing details and embodiments may vary widely from those described purely by way of non-limitative example, without thereby departing from the scope of the invention. In particular, the device of the invention can be used to fix to the hub either wheels with light alloy or sheet metal rims, or the smaller spare wheels. In addition, neither the dimensions of the washers and of the screw, nor the geometric characteristics of the head designed to make the screw easy to turn, affect in principle the efficiency of the device of the invention.

## Claims

1. A fixing device, in particular for a wheel of a motor vehicle, which includes a screw (10) having a head (14) and a stem (16) with a proximal portion (18) and a threaded distal portion (20), the said device being characterised in that it also includes a first washer (12) arranged coaxially around the proximal portion (18) of the stem (16) and generally tapering in cross section towards the distal portion (20), the perimeter of this section including a first side (22), substantially parallel to the axis (24) of the stem (16) and facing the proximal portion (18) and a second side (26) substantially orthogonal to the axis (24) of the stem (16) and facing the base of the head (14).

2. A device according to Claim 1, characterised in that the said first and second sides (22, 26) are joined by a curved third side (28) in such a way that the cross section of the first washer (12) is substantially shaped like a quarter of an ellipse or quadrant of a circle.

3. A device according to Claim 1, characterised in that the said first and second sides (22, 26) are joined by an inclined, rectilinear third side, in such a way that the said section of the first washer (12) is substantially in the shape of a right angle triangle.

4. A device according to any of the preceding Claims, characterised in that the end (30) of the said first washer (12) facing the distal portion (20) of the stem (16) is squashed, so that the said first washer (12) remains associated with the screw (16).

5. A device according to any one of the preceding Claims, characterised in that it also includes a second washer (44, of a resilient type, arranged coaxially around the proximal portion (18) of the stem (16), between the said first washer (12) and the base of the head (14).
